(19) Europäisches Patentamt
European Patent Office
Office européen des brevets

(11) **EP 4 261 802 B1**

(12) **FASCICULE DE BREVET EUROPEEN**

(45) Date de publication et mention de la délivrance du brevet:
**30.07.2025 Bulletin 2025/31**

(21) Numéro de dépôt: **23164922.9**

(22) Date de dépôt: **29.03.2023**

(51) Classification Internationale des Brevets (IPC):
**G08G 1/01** *(2006.01)* **G06N 3/08** *(2023.01)*

(52) Classification Coopérative des Brevets (CPC):
**G08G 1/0112; G06N 3/088; G08G 1/0116; G08G 1/0133; G08G 1/0141; G08G 1/065**

(54) **PROCEDE DE DETERMINATION D'UN DEBIT DE VEHICULES SUR AU MOINS UN BRIN D'UN RESEAU ROUTIER A PARTIR DE DONNEES DE GEOLOCALISATION**

VERFAHREN ZUR BESTIMMUNG EINER FAHRZEUGGESCHWINDIGKEIT AUF MINDESTENS EINEM STRANG EINES STRASSENNETZES AUS GEOLOKATIONSDATEN

METHOD FOR DETERMINING A FLOW RATE OF VEHICLES ON AT LEAST ONE SECTION OF A ROAD NETWORK FROM GEOLOCATION DATA

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.04.2022 FR 2203358**

(43) Date de publication de la demande:
**18.10.2023 Bulletin 2023/42**

(73) Titulaire: **IFP Energies nouvelles**
**92500 Rueil-Malmaison (FR)**

(72) Inventeurs:
• **OTHMAN, Bassel**
**92852 RUEIL-MALMAISON CEDEX (FR)**
• **LARAKI, Mohamed**
**92852 RUEIL-MALMAISON CEDEX (FR)**
• **DE NUNZIO, Giovanni**
**92852 RUEIL-MALMAISON CEDEX (FR)**
• **SABIRON, Guillaume**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**US-A1- 2014 114 885 US-A1- 2018 299 559**

## Description

## Domaine technique

La présente invention concerne le domaine de la détermination d'informations relatives au trafic de véhicules pour un réseau routier. En particulier, l'invention concerne un procédé de détermination d'un débit de véhicules sur au moins une portion de route d'un réseau routier.

Aujourd'hui, les métropoles et les gestionnaires de route disposent d'outils de modélisation des déplacements pour planifier et simuler l'impact de mesures de régulation et de travaux futurs, afin de réduire la congestion ou d'améliorer la qualité de l'air. Cependant, ces modèles sont très difficiles à mettre en place (besoin de données d'enquête de population très coûteuses, besoin d'un effort conséquent de calibration), difficiles à maintenir (la maintenance étant déléguée aux bureaux d'études, il est donc difficile de faire évoluer l'outil rapidement), et difficiles à mettre à jour (les enquêtes de population sont menées tous les 5 à 10 ans).

Il existe donc un fort besoin de disposer d'outils de détermination des débits véhiculaires au sein d'un réseau de transport sans devoir utiliser en entrée des données trop coûteuses et difficiles à obtenir comme les enquêtes de mobilité, qui sont d'ailleurs statiques et pas adaptées à prédire les évolutions rapides de la mobilité, ou bien des données d'usage réel, comme par exemple les données « floating car data » (FCD pouvant être traduit par données de trajets réalisés et mesurés), qui sont dynamiques mais pas forcément disponibles sur l'ensemble des brins routier d'un réseau urbain. Par ailleurs, ces outils alternatifs devraient être simples d'utilisation par des non-experts, rapides d'exécution pour évaluer et comparer facilement plusieurs cas d'étude, et enfin fiables en reproduisant au mieux des données récentes de comptage sur le réseau routier considéré.

## Technique antérieure

La majorité des approches alternatives présentes dans la littérature requièrent une ou plusieurs mesures sur un brin routier donné pour pouvoir estimer le débit trafic correspondant. Leur précision dépend du taux de pénétration des mesures et de leurs disponibilités. Pour ces méthodes, il serait donc impossible d'estimer le débit sur un brin routier qui n'est pas couvert par ces mesures. Quelques documents proposent des extrapolations et des corrélations spatio-temporelles afin d'estimer des débits de véhicule sur un réseau routier même sans couverture complète des mesures. Ils requièrent une mise à jour continue des mesures et sont souvent lourds en temps de calculs et en besoin de mémoire informatique, avec des matrices qui augmentent exponentiellement avec le réseau routier. Leur exploitation sur un large réseau routier peut donc être limitée.

La prévision du débit véhiculaire est un sujet fondamental pour l'opération et la gestion en temps réel des systèmes de transport. L'application peut aller de la surveillance du réseau routier, à la détection d'incidents, ou encore au calcul des émissions et de la qualité de l'air. Un grand nombre d'études dans la littérature proposent l'estimation du débit de trafic à partir de mesures de boucles de comptage. Ils exploitent donc des historiques de séries temporelles afin de prédire le débit trafic sur un certain horizon temporel (extrapolations temporelles). Les modèles proposés pour résoudre cette problématique sont assez larges et varient de modèles statistiques autorégressifs à des modèles de « machine learning » (apprentissage automatique en français) de type réseaux de neurones, machine à vecteurs de support (SVM), ou des forêts aléatoires. Des approches de type « deep learning » (pouvant être traduit par apprentissage profond) ont aussi été explorées dans la littérature. Ces approches amènent souvent à une meilleure prise en compte des corrélations temporelles par rapport aux approches d'apprentissage automatique. Ces méthodes se limitent toutefois aux prévisions temporelles sans étudier forcément l'extrapolation spatiale. Il est donc impossible avec ces méthodes de prédire des débits sur des brins routiers ne disposant pas de mesures.

D'autres méthodes ont proposé d'estimer le débit de trafic à partir d'autres capteurs. Une première méthode développée consiste en une estimation du débit de trafic routier à partir de données provenant de vidéos de surveillance. D'autres solutions concernent des approches statistiques et des approches d'apprentissage supervisé de type CNN (« Convolutional Neural Network » pouvant être traduit par réseau de neurones convolutif), GMM (« Gaussian Mixture Model » pouvant être traduit par modèle de mélange gaussien), ou des filtres de Kalman afin d'estimer le nombre et la direction des véhicules. D'autres méthodes se basent sur l'estimation du débit de trafic routier à partir de mesures de bruit provenant de balises acoustiques. L'approche consiste à extraire des caractéristiques du signal acoustique et de les corréler aux mesures de trafic routier avec des méthodes d'apprentissage supervisé. L'exploitation de la méthode requiert toutefois la présence continue d'un signal acoustique avec un capteur qui soit présent à côté d'un segment routier pour ne pas avoir de bruit de fond. Les données cellulaires ont aussi été exploitées dans la littérature pour l'estimation du débit de trafic. Ces types d'approches sont toutefois limités en précision qui dépend du taux de pénétration des mesures et de leurs disponibilités. Aussi, il serait donc impossible d'estimer le débit de véhicules sur un brin routier qui n'est pas couvert par ces mesures.

D'autres auteurs ont proposé des méthodes d'estimation de débit routier à partir d'un mixte de données et de capteurs présents sur un réseau routier. Certaines méthodes proposées exploitent des données FCD et des données de vidéos de surveillance et ou de mesure de boucles de comptage afin d'estimer le débit sur un réseau routier complet. Les approches peuvent aller d'apprentissage semi-supervisés de type graphe à des complétions de matrices géométriques et des filtres spatiaux temporelles. Ce type d'approche permet donc d'estimer le débit sur des brins routiers même sans mesure. Cela requiert toutefois, une pénétration plus ou moins importante des mesures sur les brins routiers avec une mise à jour continue des mesures. Ces approches sont aussi souvent lourdes en temps de calcul avec des matrices qui croient exponentiellement avec la taille du le réseau routier. Leur exploitation sur un large réseau routier peut donc être limitée.

Plus précisément, certaines méthodes proposent d'utiliser les données FCD en combinant une méthode de classification des brins routiers basés sur leur vitesse moyenne à une méthode de « Minimum Description Length » (MDL pouvant être traduit par longueur de description minimale). L'objectif est de prédire l'état du trafic des brins pour lesquels il n'y a pas de données. D'autres méthodes proposent d'utiliser un réseau de neurones convolutifs afin de prédire la densité, le débit, et la vitesse moyenne. Ce type de méthodes serait fiable dès 4% de taux de pénétration de capteurs FCD dans la flotte de véhicules. Une autre méthodologie proposée commence dans un premier temps par estimer les durées de trajet à partir des données FCD. Ensuite, le débit est estimé à partir de ces temps de trajet en utilisant des algorithmes d'apprentissage automatique. Deux approches sont distinguées dans cette approche : la première utilisant un unique modèle de prédiction du débit à partir des temps de trajets, et une autre proposant plusieurs modèles adaptés aux différents types de jour identifiés.

Enfin, les données FCD peuvent également être utilisées dans des cadres d'application beaucoup plus précis, par exemple, pour entraîner un modèle capable de signaler l'apparition de congestion et d'estimer la longueur des queues associées.

Par exemple, la demande de brevet WO20211953 décrit un procédé qui se base sur une exploitation d'une ou plusieurs mesures de capteurs sur un brin routier afin d'estimer le débit routier correspondant. Cette méthode peut donc être coûteuse si on souhaite généraliser cette approche sur un large réseau routier. En effet, cette méthode nécessiterait une grande campagne d'instrumentation. De plus, son extrapolation pour un réseau routier ou un brin routier ne disposant pas de capteurs n'est pas possible. En outre, aucune prévision de l'évolution temporelle du débit, ni aucune détermination du débit maximal ne sont permises par cette méthode.

La demande de brevet JP2012198839 décrit une prédiction temporelle du débit routier, en se basant sur un historique de mesure. Cette approche peut donc uniquement être appliquée aux brins de réseau routier disposant d'un capteur, et ne peut donc pas être exploitée sur un large réseau routier. En outre, cette demande de brevet ne permet pas la détermination du débit maximal.

La demande de brevet US2014100766 décrit une extrapolation spatiale du débit routier afin d'estimer le débit sur les brins routiers ne disposant pas de mesure. Toutefois, cette méthode ne prévoit pas l'évolution journalière du débit, ni la détermination du débit maximal d'un brin routier. L'exploitation de cette méthode est aussi limitée par le taux de pénétration de capteurs et par leurs disponibilités : en effet, pour un instant sans mesure, il n'est pas possible de réaliser l'extrapolation. Le document US2018299559 A1 représente aussi un état de la technique pertinente pour comprendre la présente invention.

## Résumé de l'invention

La présente invention a pour but de déterminer de manière fiable et rapide le débit de véhicules sur un brin routier, y compris pour un brin routier non équipé de capteur. Dans ce but, la présente invention concerne un procédé de détermination d'un débit de véhicules sur au moins un brin d'un réseau routier. Pour ce procédé, on réalise des mesures de débit, par au moins un capteur fixe en au moins un point de mesure d'un réseau routier d'apprentissage. On acquiert également des données de géolocalisation horodatées de trajets réalisées sur le réseau routier d'apprentissage. Puis, on construit, par apprentissage automatique, un classifieur qui associe une classe à chaque brin routier en fonction de données macroscopiques et de paramètres temporels. Et on construit, pour chaque classe, par apprentissage automatique, un modèle de débit qui relie des données de géolocalisation à un débit. Puis on applique consécutivement ce classifieur et ce modèle de débit au brin de réseau routier considéré. Grâce à l'utilisation de données macroscopiques, un tel modèle permet de prendre en compte l'infrastructure réelle d'un réseau routier, et peut facilement être déployé sur tout réseau routier même sans capteur. Grâce à l'horodatage des données de géolocalisation et la prise en compte de paramètres temporels, le modèle de débit peut prendre en compte les variations du débit en fonction des saisons, des mois, des jours ouvrés ou fériés, des vacances, etc., ainsi que des heures de pointe. En outre, le temps de calcul et la mémoire informatique nécessaires pour mettre en œuvre le procédé sont limités, grâce à la construction préalable du classifieur et du modèle de débit.

L'invention concerne un procédé de détermination d'un débit de véhicules sur au moins un brin d'un réseau routier considéré, au moyen d'au moins un capteur fixe de mesure de trafic disposé en au moins un point de mesure agencé sur un réseau routier d'apprentissage. Pour ce procédé, on met en œuvre les étapes suivantes :

a. On mesure un débit de véhicules audit au moins un point de mesure au moyen dudit au moins un capteur fixe de mesure de trafic ;

b. On acquiert des données de géolocalisation horodatées de trajets réalisés au sein dudit réseau routier d'apprentissage ;

c. On construit une première base d'apprentissage, à partir desdites données de géolocalisation horodatées de trajets réalisés au sein du réseau routier d'apprentissage, de données macroscopiques dudit réseau routier d'apprentissage, et d'une classification desdits trajets réalisés au sein dudit réseau routier d'apprentissage ;

d. On construit un classifieur au moyen d'une première méthode d'apprentissage automatique entraînée sur ladite première base d'apprentissage construite, ledit classifieur associant au moins une classe de ladite classification à au moins un brin dudit réseau routier en fonction desdites données macroscopiques dudit brin dudit réseau routier, de paramètres temporels, et desdites données de géolocalisation de trajets réalisés au sein dudit réseau routier ;

e. On construit une deuxième base d'apprentissage à partir desdites mesures de de débit de véhicules, desdites données de géolocalisation horodatées de trajets réalisés au sein dudit réseau routier d'apprentissage, et de ladite classification desdits trajets réalisés au sein dudit réseau routier d'apprentissage ;

f. On construit, pour chaque classe de ladite classification, un modèle de débit au moyen d'une deuxième méthode d'apprentissage automatique entraînée sur ladite deuxième base d'apprentissage construite, chaque modèle de débit associant un débit de véhicules pour la classe considérée en fonction desdites données de géolocalisation de trajets réalisés ;

g. On acquiert des données de géolocalisation horodatées de trajets réalisés au sein dudit réseau routier considéré ;

h. On classifie au moins un brin du réseau routier considéré au moyen dudit classifieur, desdites données de géolocalisation horodatées, de données macroscopiques dudit brin du réseau routier considéré, et de paramètres temporels ; et

i. On détermine le débit dudit au moins un brin du réseau routier considéré au moyen dudit modèle de débit, de ladite classe déterminée dudit au moins un brin, et desdites données de géolocalisation horodatées.

Selon un mode de réalisation, ledit procédé comprend une étape de classification, de préférence une étape de classification automatique, desdits trajets réalisés au sein du réseau routier d'apprentissage, cette étape étant préalable aux étapes de construction desdites première et deuxième bases d'apprentissage, ladite classification étant mise en œuvre en fonction desdites mesures de débit et desdites données de géolocalisation horodatées de trajets réalisés au sein dudit réseau routier d'apprentissage.

Avantageusement, le nombre de classes de ladite classification est compris entre 5 et 60, de préférence entre 8 et 50, et de manière préférée entre 30 et 50.

Selon l'invention lesdites données macroscopiques d'un réseau routier sont choisies parmi la topologie du brin du réseau routier, le nombre de voies du brin du réseau routier, la vitesse maximale autorisée du brin du réseau routier, la pente du brin du réseau routier, la signalisation du brin du réseau routier, la longueur du brin du réseau routier, de préférence lesdites données macroscopiques dudit réseau routier étant fournies par un système d'information géographique.

Conformément à une mise en œuvre, ladite première méthode d'apprentissage automatique est un apprentissage automatique supervisé de régression, de préférence une forêt d'arbres décisionnels.

Selon une option de réalisation, ladite deuxième méthode d'apprentissage automatique est un apprentissage automatique supervisé de régression, de préférence un modèle de régression monovariable d'ordre un.

De manière avantageuse, lesdits paramètres temporels sont choisis parmi le mois, la semaine, le jour de la semaine, les jours ouvrés ou les jours fermés, la plage horaire.

Conformément à un mode de réalisation, ledit classifieur détermine en outre une probabilité d'appartenance à une classe de ladite classification.

De préférence, on détermine ledit débit de véhicules dudit au moins un brin dudit réseau routier considéré au moyen d'une moyenne pondérée de débits déterminés par ledit modèle de débit pour différentes classes, la pondération correspondant à la probabilité d'appartenance à une classe déterminée.

Selon une mise en œuvre, on affiche le débit de véhicules sur ledit au moins un brin de réseau routier considéré sur une carte routière, de préférence au moyen d'un système informatique ou d'un téléphone intelligent.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre les étapes du procédé selon un premier mode de réalisation de l'invention.

La figure 2 illustre les étapes du procédé selon un deuxième mode de réalisation de l'invention.

La figure 3 illustre une classification obtenue par le classifieur selon un mode de réalisation de l'invention.

La figure 4 illustre un agencement de points de mesure sur la métropole lyonnaise pour un exemple comparatif.

La figure 5 illustre, pour l'exemple de la figure 4, des courbes comparatives du paramètre GEH en fonction du débit pour trois procédés de détermination du débit : un selon l'art antérieur, un mettant en œuvre un réseau de neurones artificiels, et un mode de réalisation de l'invention.

La figure 6 illustre, pour l'exemple de la figure 4, des courbes comparatives du paramètre GEH supérieur à 5 en fonction du débit pour trois procédés de détermination du débit : un selon l'art antérieur, un mettant en œuvre un réseau de neurones artificiels, et un mode de réalisation de l'invention.

**Description des modes de réalisation**

La présente invention concerne la détermination d'un débit de véhicules sur au moins une portion de route d'un réseau routier, de préférence sur l'ensemble d'un réseau routier. Ainsi, la présente invention vise à dénombrer le nombre de véhicules par unité de temps qui passent par une portion de route. On appelle réseau routier un ensemble de routes et de chemins dans une zone géographique prédéfinie. Cette zone géographique prédéfinie peut être un quartier d'une ville, une ville, une communauté de communes, un département, etc. Un brin du réseau routier est une subdivision élémentaire du réseau routier entre deux nœuds consécutifs du réseau routier. Par exemple un brin du réseau routier peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau routier, et d'un modèle qui est adapté au réseau routier sans données microscopiques.

Le réseau routier peut être représenté par un graphe, appelé graphe routier. Le graphe routier est composé d'un ensemble d'arêtes (appelés aussi arcs) et de nœuds, les nœuds pouvant représenter les intersections, et les arêtes les portions de routes entre les intersections. Le graphe routier peut être obtenu à partir d'un service en ligne (« webservice ») de cartographie, par exemple Here ™ (Here Apps LLC, Pays-Bas) qui fournit les arêtes du graphe sous forme d'objets géométriques purs. De préférence, le graphe routier est cohérent avec le réseau routier (toutes les connexions physiques entre deux routes, et uniquement celles-ci, sont représentées par les nœuds du graphe), aussi invariant que possible dans le temps. De plus, le graphe routier peut être simplifié, en ne prenant pas en compte les portions de routes telles que les impasses, les chemins dans les parcs ou les pistes cyclables, en fonction du type du véhicule considéré (par exemple pour le mode de réalisation des véhicules automobiles, les pistes cyclables peuvent ne pas être prises en compte).

Le procédé selon l'invention peut être mis en œuvre pour tout type de véhicules : bicyclette, véhicule automobile, deux-roues motorisé, bateau, aéroglisseur, trottinette, etc. ainsi que les déplacements piétons. Toutefois, le procédé selon l'invention est particulièrement adapté aux véhicules motorisés, tels que les véhicules automobiles, poids lourds, bus, deux-roues motorisés, etc.

Le procédé selon l'invention met en œuvre des mesures obtenues depuis au moins un capteur fixe. Chaque capteur fixe est disposé sur un point (appelé point de mesure) d'un réseau routier (appelé réseau routier d'apprentissage). Chaque capteur fixe permet des mesures ponctuelles (spatialement) et temporelles du nombre de passages de véhicules (débit de véhicules) et éventuellement de la vitesse de passage des véhicules (vitesse de trafic). Les positions des points de mesure sont identifiées au sein du réseau routier. Selon un mode de réalisation de l'invention, les capteurs fixes peuvent être des caméras, des radars, des boucles inductives, des cellules photoélectriques sensibles détectant la rupture d'un rayon lumineux, des câbles piézoélectriques mesurant la pression exercée sur la chaussée ou tous capteurs analogues.

Le procédé selon l'invention est un procédé de détermination d'un débit de véhicules sur au moins un brin d'un réseau routier considéré. Ce procédé met en œuvre les étapes suivantes :

1. Mesures avec les capteurs fixes

2. Acquisition de données de géolocalisation horodatées pour le réseau routier d'apprentissage

3. Construction d'une première base d'apprentissage

4. Construction d'un classifieur

5. Construction d'une deuxième base d'apprentissage

6. Construction d'un modèle de débit

7. Acquisition de données de géolocalisation horodatées pour le réseau routier considéré

8. Détermination de la classe du brin considéré

9. Détermination du débit du brin considéré

Les étapes 2 à 9 peuvent être mises en œuvre par des moyens informatiques, par exemple un ordinateur. Les étapes 1 à 6 peuvent être réalisées hors ligne, et les étapes 7 à 9 peuvent être réalisées en ligne. Les étapes 1 et 2 peuvent être réalisées dans cet ordre, en ordre inverse ou simultanément. De même, les étapes 5 et 6 peuvent être réalisées après les étapes 3 et 4, ou pendant les étapes 3 et 4, ou avant les étapes 3 et 4. L'utilisation en ligne du classifieur et du modèle de débit permet une simplicité d'utilisation, un temps de calcul en ligne réduit, et un besoin en mémoire informatique limité, par rapport à un modèle microscopique, tout en ayant une bonne précision. Ces étapes sont détaillées dans la suite de la description.

Le procédé selon l'invention peut être vu comme l'utilisation d'un capteur (mesure de débit et données de géolocalisation mesurées), et de moyens de traitement du signal (classifieur et modèle de débit), pour déterminer une grandeur physique : le débit de véhicules.

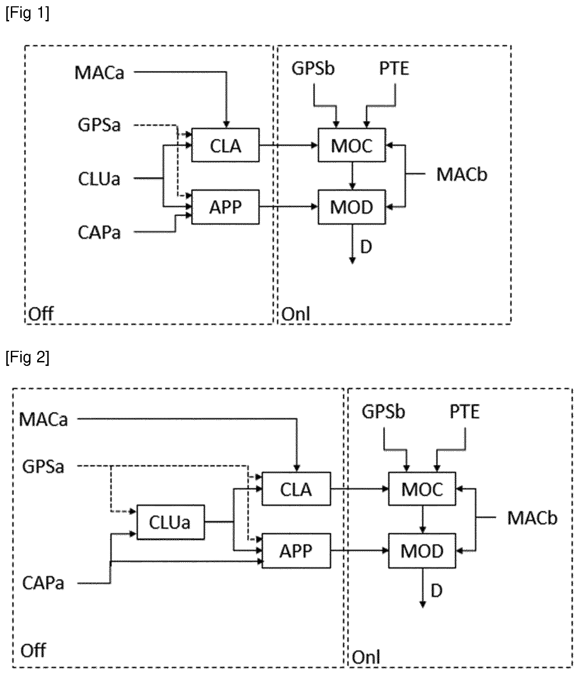

La figure 1 illustre, schématiquement et de manière non limitative, les étapes du procédé de détermination du débit de véhicules selon un mode de réalisation de l'invention. Sur cette figure, certaines flèches sont en traits discontinus uniquement pour permettre une meilleure lisibilité de la figure. Au moyen de données macroscopiques MACa du réseau routier d'apprentissage, de données de géolocalisation horodatées GPSa de trajets réalisés au sein du réseau routier d'apprentissage, et d'une classification CLUa des trajets réalisés, on forme une première base d'apprentissage. Cette première base d'apprentissage est utilisée par un apprentissage automatique CLA pour la construction d'un classifieur MOC. De plus, au moyen de mesures du capteur fixe CAPa, des données de géolocalisation horodatées GPSa de trajets réalisés au sein du réseau routier d'apprentissage, et de la classification CLUa des trajets réalisés, on forme une deuxième base d'apprentissage. Cette deuxième base d'apprentissage est utilisée par un apprentissage automatique APP pour la construction d'un modèle de débit MOD. Ces étapes sont réalisées hors ligne Off. Puis, en ligne Onl, on utilise le classifieur MOC à partir de données de géolocalisation horodatées GPSb de trajets réalisés sur le réseau routier considéré, de données macroscopiques MACb du réseau routier considéré, et de paramètres temporels, pour déterminer au moins une classe d'au moins un brin routier pour un instant déterminé. Puis cette classe et ces données macroscopiques MACb du réseau routier considéré sont utilisés par le modèle de débit pour déterminer le débit D du brin du réseau routier considéré.

Selon un mode de réalisation de l'invention, le procédé peut comporter en outre une étape préalable (en amont des étapes de construction des première et deuxième bases d'apprentissage) de classification des trajets réalisés au sein du réseau routier d'apprentissage.

Pour ce mode de réalisation, le procédé peut comporter les étapes suivantes :

1. Mesures avec les capteurs fixes

2. Acquisition de données de géolocalisation horodatées pour le réseau routier d'apprentissage

2'. Classification des trajets réalisés pour le réseau routier d'apprentissage 3. Construction d'une première base d'apprentissage

4. Construction d'un classifieur

5. Construction d'une deuxième base d'apprentissage

6. Construction d'un modèle de débit

7. Acquisition de données de géolocalisation horodatées pour le réseau routier considéré

8. Détermination de la classe du brin considéré

9. Détermination du débit du brin considéré

Les étapes 2 à 9 (y compris 2') peuvent être mises en œuvre par des moyens informatiques, par exemple un ordinateur. Les étapes 1 à 6 (y compris 2') peuvent être réalisées hors ligne, et les étapes 7 à 9 peuvent être réalisées en ligne. Les étapes 1 et 2 peuvent être réalisées dans cet ordre, en ordre inverse ou simultanément. De même, les étapes 5 et 6 peuvent être réalisées après les étapes 3 et 4, ou pendant les étapes 3 et 4, ou avant les étapes 3 et 4. L'utilisation en ligne du classifieur et du modèle de débit permet une simplicité d'utilisation, un temps de calcul en ligne réduit, et un besoin en mémoire informatique limité, par rapport à un modèle microscopique, tout en ayant une bonne précision. Ces étapes sont détaillées dans la suite de la description.

La figure 2 illustre, schématiquement et de manière non limitative, les étapes du procédé de détermination du débit de véhicules selon ce mode de réalisation de l'invention. Sur cette figure, certaines flèches sont en traits discontinus uniquement pour permettre une meilleure lisibilité de la figure. Les éléments identiques au mode de réalisation de la figure 1 ne sont pas redétaillés. Le procédé comprend une étape de classification CLUa des trajets réalisés à partir des données de géolocalisation horodatées GPSa au sein du réseau routier d'apprentissage ainsi que des mesures du capteur fixe CAPa au sein du réseau routier d'apprentissage. Les classes déterminées par cette étape de classification CLUa sont utilisées ensuite dans l'étape de construction du classifieur CLA et dans l'étape de construction du modèle de débit de véhicules APP.

Dans la suite de la demande, le réseau routier auquel on applique les étapes 6 à 9 est appelé « réseau routier considéré ». Il pourrait être également appelé « premier réseau routier », il s'agit du réseau routier pour lequel on souhaite déterminer le débit de véhicule. Ces notations permettent de le distinguer du « réseau routier d'apprentissage » (qui peut être également appelé « deuxième réseau routier »), qui sert pour la construction de la première base d'apprentissage et de la deuxième base d'apprentissage. Le « réseau routier considéré » peut correspondre ou peut inclure le « réseau routier d'apprentissage », ou être un réseau routier différent du « réseau routier d'apprentissage ».

### 1. Mesures avec les capteurs fixes

Lors de cette étape, on mesure un débit de véhicules en au moins un point de mesure du réseau routier d'apprentissage au moyen des capteurs fixes. Ce débit de véhicules aux points de mesures est ponctuel (en terme spatial et non en terme temporel) : il concerne uniquement les points de mesures.

De préférence, on peut réaliser également lors de cette étape l'horodatage des mesures par capteurs fixes, afin de connaître l'instant de passage du véhicule sur les points de mesure. Cette mesure peut permettre de déterminer le nombre de passages de véhicules pour une période donnée, ou peut être mise en œuvre dans une détermination prédictive de nombre de passages de véhicules pour une période future.

Selon un mode de réalisation, on peut également mesurer au moyen des capteurs fixes la vitesse de véhicules aux points de mesure lors de cette étape.

Conformément à une mise en œuvre de l'invention, lors de cette étape, on peut compléter les mesures avec des valeurs simulées de trafic, en des brins du réseau routier d'apprentissage. Le simulateur dit « SUMO » (pour « Simulation of Urban Mobility » pouvant être traduit par simulation de mobilité urbain) est un exemple de simulateur de trafic open-source (c'est-à-dire en libre-accès). D'autres simulateurs de trafic peuvent être utilisés. Ces données simulées peuvent permettre de compléter les données mesurées, si celles-ci ne sont pas suffisantes, et ainsi améliorer la construction des modèles de débit et éventuellement de vitesse de trafic.

De manière avantageuse, on peut mettre en œuvre la mesure de débit et éventuellement de vitesse pendant au moins un mois, de préférence pendant au moins une année, de manière à prendre en compte toutes les évolutions temporelles (vacances scolaires, jours fériés, saisons, mois, etc.).

### 2. Acquisition de données de géolocalisation horodatées pour le réseau routier d'apprentissage

Lors de cette étape, on acquiert des données de géolocalisation mesurées horodatées de trajets réalisés au sein du réseau routier d'apprentissage. Les données de trajets réalisés peuvent comporter des données mesurées lors de trajets antérieurs, notamment la vitesse, la position et l'altitude ainsi que l'instant du trajet réalisé. De préférence, les données de trajets réalisés peuvent être mesurées au moyen d'un système de géolocalisation, tel qu'un capteur de positionnement par satellite, tel que le système GPS (de l'anglais Global Positioning System), le système Galileo, etc. Le système de géolocalisation peut être embarqué à bord du véhicule ou déporté (par exemple au moyen d'un téléphone intelligent, de l'anglais « smartphone »). Grâce à l'horodatage des données de géolocalisation le classifieur et le modèle de débit peuvent prendre en compte les variations du débit en fonction des saisons, des mois, des jours ouvrés ou fériés, des vacances, etc., ainsi que les heures de pointe.

Selon un mode de réalisation, lors de cette étape, on peut réaliser les mesures de géolocalisation lors de déplacements d'au moins un véhicule.

De préférence, ces données de géolocalisation peuvent se présenter sous la forme de séquences horodatées de paires latitude/longitude (trajets), de sorte que des valeurs telles que la durée et la vitesse moyenne puissent être estimées pour chaque séquence.

Avantageusement, les données de géolocalisation peuvent être traitées, c'est-à-dire appariées au réseau routier d'apprentissage. En d'autres termes, pour ce mode de réalisation, le procédé peut comprendre une étape de « mapmatching » (pouvant être traduit par cartospondance) des données de géolocalisation mesurées.

### 2'. Classification des trajets réalisés pour le réseau routier d'apprentissage

Lors de cette étape facultative, on classe les trajets réalisés sur le réseau routier d'apprentissage. En d'autres termes, pour chaque mesure par le capteur fixe, on associe une classe (également appelé « cluster ») d'une classification. Chaque classe est composée de trajets réalisés ayant des comportements similaires en termes de débits mesurés par les capteurs fixes et par les données de géolocalisation horodatées.

Selon un mode de réalisation de l'invention, la classification peut être mise en œuvre en fonction des mesures de débit (étape 1) et des données de géolocalisation horodatées (étape 2). De préférence, la classification peut être mise en œuvre en fonction du débit mesuré et du rapport de pénétration des données de géolocalisation horodatées, le rapport de pénétration des données de géolocalisation horodatées correspond au rapport au débit issue de données de géolocalisation par rapport au débit issue de mesures par le(s) capteur(s) fixe(s).

Conformément à une mise en œuvre de l'invention, une classification peut également prendre en compte une distinction des types de jour, des heures de pointe, des types de brin routier et de leur capacité (débit maximal).

Avantageusement, le nombre de classes de ladite de classification peut être compris entre 5 et 60, de préférence entre 8 et 50, et de manière préférée entre 30 et 50. En effet, un faible nombre de classes ne permet pas une précision et une fiabilité suffisante du procédé de détermination du débit de véhicules, et un nombre de classes trop élevé augmente le temps de calcul et la mémoire informatique nécessaire sans augmenter la fiabilité de la détermination du débit de véhicules.

De préférence, on peut classer les trajets réalisés de manière automatique. Plusieurs algorithmes d'apprentissage automatique non supervisés peuvent être utilisés pour cette étape, par exemple l'algorithme du k-means (en français K-moyennes) ou toute méthode analogue, telle que la méthode DBSCAN (de l'anglais « density-based spatial clustering of applications with noise » qui est un algorithme de partitionnement de données fondé sur la densité dans la mesure qui s'appuie sur la densité estimée des clusters pour effectuer le partitionnement), la méthode « Means-Shift » (pouvant être traduit par décalage moyen, la méthode « expectation-maximization » (pouvant être traduit par espérance-maximisation) qui est une méthode de clustering utilisant des modèles de mélange gaussien GMM (« Gaussian Mixture Models »).

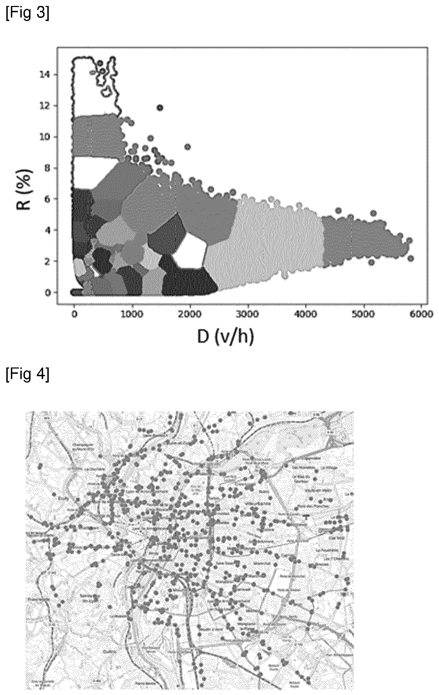

La figure 3, présentée à titre purement illustratif, présente, schématiquement et de manière non limitative, un regroupement en classes pour un exemple. Pour cette classification les trajets réalisés sont représentés par des points dans un graphique du rapport de pénétration R en % en fonction du débit D en véhicule par heure (v/h). Chaque zone en nuance de gris correspond à une classe ayant des comportements similaires en termes de débits mesurés par les capteurs fixes et par les données de géolocalisation horodatées. Pour cet exemple, 50 classes sont déterminées.

### 3. Construction d'une première base d'apprentissage

Lors de cette étape, on construit une première base d'apprentissage pour un réseau routier d'apprentissage. Le réseau routier d'apprentissage est un réseau routier pour lequel on connaît certaines caractéristiques qui servent dans les étapes 1 à 6 pour la construction du classifieur et du modèle de débit. Le réseau routier d'apprentissage peut être différent ou identique du réseau routier considéré pour les étapes 7 à 9. En effet, l'invention permet de déterminer le débit pour un autre réseau routier que celui qu'on utilise pour construire le modèle.

On construit la première base d'apprentissage à partir au moins de données macroscopiques du réseau routier d'apprentissage, à partir des données de géolocalisation horodatées (issues de l'étape 2) et de la classification des trajets réalisés (pouvant être issues de l'étape 2' ou étant une donnée d'entrée du procédé selon l'invention). Les données macroscopiques du réseau routier correspondent aux informations liées au réseau routier, telle que l'infrastructure, la pente, la signalisation, etc.

Selon un aspect de l'invention, les données macroscopiques du réseau routier peuvent être la topologie (c'est-à-dire la pente, la courbure de la route, les intersections, la signalisation, etc.), le type de brin routier (par exemple route urbaine, autoroute, etc.), le nombre de voies du brin routier, la vitesse maximale du brin routier, la signalisation du brin routier, la pente du brin routier, la longueur du brin routier, etc. Préférentiellement, les données macroscopiques comprennent au moins le type de brin routier, le nombre de voies du brin routier, la vitesse maximale du brin routier et la longueur du brin routier. De préférence, les données macroscopiques du réseau routier peuvent être fournies par un système d'information géographique (SIG). Here ™, Google Maps ™, OpenStreetMap ™ sont des exemples de système d'information géographique. Les données macroscopiques sont toujours disponibles et depuis n'importe quel lieu. Ainsi, elles peuvent servir comme entrées de la première base d'apprentissage et du classifieur.

### 4. Construction d'un classifieur

Lors de cette étape, on construit un classifieur qui associe au moins une classe de ladite classification à au moins un brin du réseau routier en fonction des données macroscopiques, de paramètres temporels et de données de géolocalisation. En d'autres termes, le classifieur permet de déterminer une classe pour un brin d'un réseau routier, pour une période donnée ; le classifieur étant dépendant des données de géolocalisation de trajets réalisés.

Les paramètres temporels, qui sont relatifs aux périodes des trajets réalisés, peuvent être choisies parmi la saison, le mois, la semaine, le jour de la semaine, l'instant de la journée (par exemple un créneau horaire), le calendrier des jours fériés pour le réseau routier considéré, le calendrier des vacances scolaires pour le réseau routier considéré, etc. Les paramètres temporels peuvent être fournis par un webservice (service en ligne). La prise en compte de ces paramètres permet que le débit soit représentatif des évolutions du débit en fonction du temps, par exemple en fonction du jour de la semaine, des jours fériés, etc.

Lors de cette étape, on construit le classifieur au moyen d'une première méthode d'apprentissage automatique (de l'anglais « machine learning ») entraînée au moyen de la première base d'apprentissage construite telle que décrite ci-dessus.

Lors de cette étape, on peut construire le modèle de débit par apprentissage automatique, de préférence par apprentissage automatique supervisé, de manière préférée par apprentissage automatique supervisé de régression. Etant donné que l'invention proposée considère le débit mesuré en certains points de mesure et les données macroscopiques du réseau routier pour l'apprentissage automatique, le modèle du débit de véhicules est précis et représentatif.

Selon un exemple de réalisation, le classifieur peut s'écrire :
$C = f(Top, pente, t, GPS(t))$ avec Top la topologie du brin routier, pente la pente du brin routier, t l'instant considéré, GPS(t) les données de géolocalisation horodatées. Top, pente sont des exemples de données macroscopiques. De manière générale, la fonction f peut dépendre d'autres données macroscopiques du réseau routier telles que celles listées précédemment (par exemple, le type de brin routier, le nombre de voies du brin routier, la vitesse maximale et la longueur du brin routier).

La fonction f peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en œuvre un algorithme de forêt d'arbres décisionnels, le paramètre du nombre d'arbres étant fixé à 50 et l'indice de diversité de Gini étant considéré par le classifieur.

Conformément à une mise en œuvre de l'invention, le classifieur peut être construit pour déterminer en outre la probabilité d'appartenance d'un point à chacune des classes de la classification. Ainsi, grâce à la prise en compte de cette probabilité, la détermination du débit de véhicules peut être plus précis.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

### 5. Construction d'une deuxième base d'apprentissage

Lors de cette étape, on construit une deuxième base d'apprentissage pour un réseau routier d'apprentissage. De préférence, le réseau routier d'apprentissage de la deuxième base d'apprentissage est identique au réseau routier d'apprentissage de la première base d'apprentissage. Le réseau routier d'apprentissage est un réseau routier pour lequel on connaît certaines caractéristiques qui servent dans les étapes 1 à 6 pour la construction du classifieur et modèle de débit. Le réseau routier d'apprentissage peut être différent ou identique au réseau routier considéré pour les étapes 7 à 9. En effet, l'invention permet de déterminer le débit pour un autre réseau routier que celui qu'on utilise pour construire le modèle.

On construit la deuxième base d'apprentissage à partir des données de géolocalisation horodatées (issues de l'étape 2), des mesures par le capteur fixe (issues de l'étape 1) et la classification des trajets réalisés (pouvant être issues de l'étape 2' ou étant une donnée d'entrée du procédé selon l'invention).

### 6. Construction d'un modèle de débit

Lors de cette étape, on construit un modèle de débit pour chaque classe qui associe un débit de véhicules à au moins un brin du réseau routier en fonction de la classe et de données de géolocalisation. En d'autres termes, le modèle de débit de véhicules permet de déterminer un débit de véhicule pour un brin d'un réseau routier, pour une période donnée ; le modèle de débit de véhicules étant dépendant des données de géolocalisation de trajets réalisés et de la classe.

Lors de cette étape, on construit le modèle de débit de véhicules au moyen d'une deuxième méthode d'apprentissage automatique (de l'anglais « machine learning ») entraînée au moyen de la deuxième base d'apprentissage construite telle que décrite ci-dessus.

Lors de cette étape, on peut construire le modèle de débit par apprentissage automatique, de préférence par apprentissage automatique supervisé, de manière préférée par apprentissage automatique supervisé de régression. Etant donné que l'invention proposée considère le débit mesuré en certains points de mesure et les données macroscopiques du réseau routier pour l'apprentissage automatique, le modèle du débit de véhicules est précis et représentatif.

Selon un exemple de réalisation, le modèle de débit D peut s'écrire :
$D = g(C, GPS(t))$ avec t l'instant considéré, C la classe, GPS(t) les données de géolocalisation horodatées.

La fonction g peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en œuvre un modèle de régression monovariable d'ordre un, qui estime le débit réel $\hat{y}$ à partir du débit issu des données de géolocalisation horodatées x, au moyen de la formule suivante :

$$\hat{y} = \alpha_j + \beta_j x$$

Où $\alpha_j$ et $\beta_j$ sont les coefficients de régression de la classe j.

Alternativement, le modèle de régression peut prendre d'autre forme, par exemple être d'ordre deux, ou trois, etc.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

### 7. Acquisition de données de géolocalisation horodatées pour le réseau routier considéré

Lors de cette étape, on acquiert des données de géolocalisation mesurées horodatées de trajets réalisés au sein du réseau routier considéré. Les données de trajets réalisés peuvent comporter des données mesurées lors de trajets antérieurs, notamment la vitesse, la position et l'altitude ainsi que l'instant du trajet réalisé. De préférence, les données de trajets réalisés peuvent être mesurées au moyen d'un système de géolocalisation, tel qu'un capteur de positionnement par satellite, tel que le système GPS (de l'anglais Global Positioning System), le système Galileo, etc. Le système de géolocalisation peut être embarqué à bord du véhicule ou déporté (par exemple au moyen d'un téléphone intelligent, de l'anglais « smartphone »).

Selon un mode de réalisation, lors de cette étape, on peut réaliser les mesures de géolocalisation lors de déplacements d'au moins un véhicule.

De préférence, ces données de géolocalisation peuvent se présenter sous la forme de séquences horodatées de paires latitude/longitude (trajets), de sorte que des valeurs telles que la durée et la vitesse moyenne puissent être estimées pour chaque séquence.

Avantageusement, les données de géolocalisation peuvent être traitées, c'est-à-dire appariées au réseau routier considéré. En d'autres termes, pour ce mode de réalisation, le procédé peut comprendre une étape de « mapmatching » (pouvant être traduit par cartospondance) des données de géolocalisation mesurées.

## 8. Détermination de la classe du brin considéré

Lors de cette étape, on attribue au moins une classe au moins un brin du réseau routier considéré au moyen du classifieur compris à l'étape 4. Le réseau routier considéré peut être identique ou différent du réseau routier d'apprentissage. En d'autres termes, on applique le classifieur à au moins un brin du réseau routier considéré au moyen des données de géolocalisation horodatées du réseau routier considéré (issues de l'étape 7), de données macroscopiques de l'au moins un brin et de paramètres temporels.

Les paramètres temporels, qui sont relatifs aux périodes des trajets réalisés, peuvent être choisies parmi la saison, le mois, la semaine, le jour de la semaine, l'instant de la journée (par exemple un créneau horaire), le calendrier des jours fériés pour le réseau routier considéré, le calendrier des vacances scolaires pour le réseau routier considéré, etc. Les paramètres temporels peuvent être fournis par un webservice (service en ligne). La prise en compte de ces paramètres permet que le débit soit représentatif des évolutions du débit en fonction du temps, par exemple en fonction du jour de la semaine, des jours fériés, etc.

Pour le mode de réalisation pour lequel le classifieur permet de déterminer une probabilité d'appartenance à une classe, on peut déterminer une pluralité de classes et leurs probabilités d'appartenance pour chaque brin routier considéré.

## 9. Détermination du débit du brin considéré

Lors de cette étape, on détermine le débit d'au moins un brin du réseau routier au moyen du modèle de débit de véhicules construit à l'étape 6. En d'autres termes, on applique le modèle de débit à au moins un brin du réseau routier considéré au moyen des données de géolocalisation horodatées du réseau routier considéré (issues de l'étape 7), et de la classe du brin routier considéré (issue de l'étape 8).

Pour le mode de réalisation pour lequel le classifieur permet de déterminer une probabilité d'appartenance à une classe, on peut déterminer le débit de véhicules sur au moins un brin routier au moyen d'une moyenne pondérée des débits déterminées pour chaque classe, la pondération correspondant à la probabilité d'appartenance à la classe. En d'autres termes le débit d'un brin routier Db peut s'écrire :

$$Db(t) = \sum_{j=1}^{N} p_j D_j(t)$$

Avec t l'instant considéré, j les classes déterminées par le classifieur pour le brin routier ; j variant de 1 à N, $p_j$ la probabilité d'appartenance à la classe j, $D_j$ le débit déterminé par le modèle de débit pour la classe j.

De plus, le procédé selon l'invention peut comporter une étape d'affichage du débit de véhicules. Lors de cette étape, on affiche le débit de véhicules déterminé sur une carte routière (sur un graphe routier). Cet affichage peut prendre la forme d'une note ou d'un code couleur ou d'une épaisseur de représentation de la route. Cet affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'afficher le nombre de passages de véhicules sur un site internet, que l'utilisateur peut consulter postérieurement à sa conduite. De plus, le débit de véhicules peut être partagé avec les pouvoirs publics (par exemple gestionnaire de la voirie) et les entreprises de travaux publics. Ainsi, les pouvoirs publics et les entreprises de travaux publics peuvent déterminer les routes ayant un débit de véhicules élevé et adapter les routes aux utilisateurs (par exemple création de nouvelles voies, modification de la signalisation, etc.).

En outre, l'invention concerne un procédé de gestion d'infrastructures d'un réseau routier. Pour ce procédé, on peut mettre en œuvre les étapes suivantes :

a) On détermine le débit de véhicules pour au moins un brin du réseau routier au moyen d'une procédé de détermination de débit selon l'une quelconque des variantes ou des combinaisons de variantes décrites ci-dessus ; et

b) On modifie au moins une infrastructure du réseau routier en fonction du débit déterminé, par exemple une infrastructure pour lequel le débit de véhicules est maximal ou supérieur à un seuil prédéterminé.

Ainsi, on peut gérer un réseau routier pour limiter voire éviter les pics de pollution, les embouteillages, les risques d'accident.

Selon un mode de réalisation, la modification de l'infrastructure peut être choisie notamment parmi l'ajout d'une signalisation (limitation de vitesse, feu, céder le passage, stop, etc.), la construction d'une nouvelle voie, passage d'un brin à sens unique, construction d'une nouvelle route, etc.

Exemples comparatifs

Les caractéristiques et avantages du procédé selon l'invention apparaîtront plus clairement à la lecture des exemples comparatifs ci-après.

Afin d'illustrer le potentiel de l'invention, une étude de cas a été menée sur 723 brins (723 points de mesure) d'un réseau routier de la métropole de Lyon avec des données collectée sur la totalité de l'année 2021. Les données de trafic mesurées correspondent aux données FCD (données de géolocalisation horodatées) et aux données référence mesurées par des boucles de comptage (mesures de débit aux points de mesure). Les variables topographiques (données macroscopiques) et temporelles associées à ces mesures complètent les données de ce cas d'étude. La localisation des brins considérés est présentée à titre purement illustratif sur la Figure 4. Sur cette figure, les points en gris correspondent aux points de mesure équipés de boucle de comptage. Ce jeu de données est aléatoirement divisé en un ensemble d'entraînement de 70% et un ensemble de test de 30%.

Pour ces mesures, on applique trois procédés de détermination du débit de véhicules sur le même ensemble d'entraînement :

- Un modèle de régression, selon un art antérieur, pour lequel un unique modèle de régression monovariable d'ordre un est appliqué à l'ensemble des données,
- Un réseau de neurones artificiels, qui génère un modèle de débit sur la base des données FCD et des mesures aux points de mesure, et
- Le procédé selon un mode de réalisation de l'invention, avec un classifieur obtenu par un apprentissage automatique de forêt d'arbres décisionnels, et avec un modèle de débit obtenu par un modèle de régression monovariable d'ordre un pour chaque classe.

Le modèle de régression est un simple modèle de régression monovariable d'ordre un, calibré pour obtenir une estimation du débit réel à partir du débit déterminé par les données de géolocalisation horodatées. Le modèle de régression peut s'écrire :

$$\hat{y} = \alpha + \beta x$$

Avec x le débit issu des données de géolocalisation horodatées, $\hat{y}$ le débit réel déterminé, et $\alpha$ et $\beta$ des coefficients de régression. Pour cet exemple, l'optimisation des coefficients sur l'ensemble d'entraînement donne des valeurs $\alpha$ = 149 et $\beta$ = 27,9.

Le réseau de neurones artificiels possède les mêmes données en entrée que le classifieur selon l'invention. Le réseau de neurones est entraîné sur les mêmes données d'entraînement que le modèle de régression. Il est composé de 5 couches comportant chacune respectivement 24, 12, 12, 8, et 8 nœuds. Tous les nœuds ont la même fonction d'activation : Reticfied Linear Unit (pouvant être traduit par unité linéaire rectifié) Cependant, d'autres fonctions d'activation pourraient être choisies. La sortie du réseau de neurones donne directement une estimation du débit de véhicules.

Afin d'analyser la performance des différents modèles, nous utilisons la métrique GEH (Geoffrey E. Havers) telle que décrite notamment dans le document Feldman, Olga. "The GEH measure and quality of the highway assignment models." Association for European Transport and Contributors (2012): 1-18. La métrique GEH peut être définie par :

$$GEH = \sqrt{\frac{2(M-C)^2}{M+C}}$$

Où M et C correspondent respectivement aux débits prédit (obtenu par procédé de détermination) et réel (issu de la mesure). En général, un GEH inférieur à 5 est considéré comme une bonne correspondance entre les volumes horaires modélisés et observés et 85% des prédictions de débit dans un modèle de trafic devraient avoir un GEH inférieur à 5. Les GEH de l'ordre de 5 à 10 peuvent nécessiter une étude plus approfondie. Enfin, si le GEH est supérieur à 10, il y a une forte probabilité qu'il y ait un problème avec la calibration du modèle ou avec les données elles-mêmes.

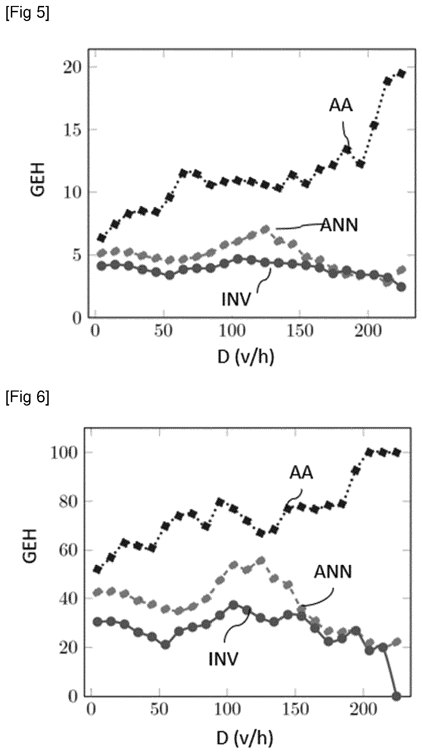

On applique cette métrique aux trois procédés de détermination du débit. La Figure 5 représente la valeur moyenne de la métrique GEH pour chacun des modèles, en fonction du débit de véhicules D en véhicules par heure v/h, calculée par intervalle de débit FCD de 10 véhicules par heure. Sur cette figure la courbe AA correspond au modèle de régression, la courbe ANN correspond au réseau de neurones artificiel, et la courbe INV correspond au procédé selon l'invention. On observe que le procédé selon l'invention permet d'obtenir une métrique GEH inférieure aux autres procédés. Le GEH moyen calculé sur tout l'ensemble de test est de 6,9 pour le modèle de régression, 5,2 pour le réseau de neurones artificiels, et 4,1 pour le procédé selon l'invention. Il en résulte que le procédé selon l'invention permet une prédiction précise du débit du véhicules, en particulier plus précises que les autres procédés de détermination du débit de véhicules.

De plus, on peut tracer pour chaque procédé une courbe du taux de valeur du GEH supérieur à 5 en fonction du débit D. La figure 6 illustre cette courbe. Sur cette figure la courbe AA correspond au modèle de régression, la courbe ANN correspond au réseau de neurones artificiel, et la courbe INV correspond au procédé selon l'invention. On observe que le procédé selon l'invention permet d'obtenir un plus faible taux de GEH supérieur à 5 que les autres procédés de détermination de débit. Par conséquent, le procédé selon l'invention est bien adapté pour la détermination du débit de véhicules.

**Revendications**

1.  Procédé de détermination d'un débit (D) de véhicules sur au moins un brin d'un réseau routier considéré, au moyen d'au moins un capteur fixe de mesure de trafic disposé en au moins un point de mesure agencé sur un réseau routier d'apprentissage, **caractérisé en ce qu'**on met en œuvre les étapes suivantes :

    a. On mesure (CAPa) un débit de véhicules audit au moins un point de mesure au moyen dudit au moins un capteur fixe de mesure de trafic ;

    b. On acquiert des données de géolocalisation horodatées (GPSa) de trajets réalisés au sein dudit réseau routier d'apprentissage ;

    c. On construit une première base d'apprentissage, à partir desdites données de géolocalisation horodatées (GPSa) de trajets réalisés au sein du réseau routier d'apprentissage, de données macroscopiques (MACa) dudit réseau routier d'apprentissage, et d'une classification (CLUa) desdits trajets réalisés au sein dudit réseau routier d'apprentissage, ladite classification comprenant au moins une classe, chaque classe étant composée de trajets réalisés ayant des comportements similaires en termes de débits mesurés, lesdites données macroscopiques étant choisies parmi la topologie, le type de brin routier, le nombre de voies du brin routier, la vitesse maximale du brin routier, la signalisation du brin routier, la pente du brin routier, et la longueur du brin routier ;

    d. On construit un classifieur (MOC) au moyen d'une première méthode d'apprentissage automatique (CLA) entrainée sur ladite première base d'apprentissage construite, ledit classifieur associant au moins une classe de ladite classification à au moins un brin dudit réseau routier en fonction desdites données macroscopiques dudit brin dudit réseau routier, de paramètres temporels (PTE) relatifs aux périodes des trajets réalisés, et desdites données de géolocalisation de trajets réalisés au sein dudit réseau routier ;

    e. On construit une deuxième base d'apprentissage à partir desdites mesures de de débit de véhicules (CAPa), desdites données de géolocalisation horodatées (GPSa) de trajets réalisés au sein dudit réseau routier d'apprentissage, et de ladite classification (CLUa) desdits trajets réalisés au sein dudit réseau routier d'apprentissage ;

    f. On construit, pour chaque classe de ladite classification, un modèle de débit (MOD) au moyen d'une deuxième méthode d'apprentissage automatique (APP) entraînée sur ladite deuxième base d'apprentissage construite, chaque modèle de débit associant un débit de véhicules pour la classe considérée en fonction desdites données de géolocalisation de trajets réalisés ;

    g. On acquiert des données de géolocalisation horodatées (GPSb) de trajets réalisés au sein dudit réseau routier considéré ;

    h. On classifie au moins un brin du réseau routier considéré au moyen dudit classifieur (MOC), desdites données de géolocalisation horodatées (GPSb), de données macroscopiques (MACb) dudit brin du réseau routier considéré, et de paramètres temporels (PTE) ; et

    i. On détermine le débit (D) dudit au moins un brin du réseau routier considéré au moyen dudit modèle de débit (MOD), de ladite classe déterminée dudit au moins un brin, et desdites données de géolocalisation horodatées (MACb).

2.  Procédé de détermination d'un débit de véhicules selon la revendication 1, dans lequel ledit procédé comprend une étape de classification (CLUa), de préférence une étape de classification automatique, desdits trajets réalisés au sein du réseau routier d'apprentissage, cette étape étant préalable aux étapes de construction desdites première et deuxième bases d'apprentissage, ladite classification étant mise en œuvre en fonction desdites mesures de débit et desdites données de géolocalisation horodatées de trajets réalisés au sein dudit réseau routier d'apprentissage.

3.  Procédé de détermination d'un débit de véhicules selon la revendication 2, dans lequel le nombre de classes de ladite classification est compris entre 5 et 60, de préférence entre 8 et 50, et de manière préférée entre 30 et 50.

4.  Procédé de détermination d'un débit de véhicules selon l'une des revendications précédentes, dans lequel lesdites données macroscopiques (MACa, MACb) dudit réseau routier sont fournies par un système d'information géographique.

5.  Procédé de détermination d'un débit de véhicules selon l'une des revendications précédentes, dans lequel ladite première méthode d'apprentissage automatique (CLA) est un apprentissage automatique supervisé de régression, de préférence une forêt d'arbres décisionnels.

6. Procédé de détermination d'un débit de véhicules selon l'une des revendications précédentes, dans lequel ladite deuxième méthode d'apprentissage automatique (APP) est un apprentissage automatique supervisé de régression, de préférence un modèle de régression monovariable d'ordre un.

7. Procédé de détermination d'un débit de véhicules selon l'une des revendications précédentes, dans lequel lesdits paramètres temporels (PTE) sont choisis parmi le mois, la semaine, le jour de la semaine, les jours ouvrés ou les jours fermés, la plage horaire.

8. Procédé de détermination d'un débit de véhicules selon l'une des revendications précédentes, dans lequel ledit classifieur (MOC) détermine en outre une probabilité d'appartenance à une classe de ladite classification.

9. Procédé de détermination d'un débit de véhicules selon la revendication 8, dans lequel on détermine ledit débit (D) de véhicules dudit au moins un brin dudit réseau routier considéré au moyen d'une moyenne pondérée de débits déterminés par ledit modèle de débit pour différentes classes, la pondération correspondant à la probabilité d'appartenance à une classe déterminée.

10. Procédé de détermination d'un débit de véhicules selon l'une des revendications précédentes, dans lequel on affiche le débit de véhicules (D) sur ledit au moins un brin de réseau routier considéré sur une carte routière, de préférence au moyen d'un système informatique ou d'un téléphone intelligent.

**Patentansprüche**

1. Verfahren zur Bestimmung eines Verkehrsflusses (D) von Fahrzeugen auf mindestens einem Abschnitt eines betrachteten Straßennetzes mittels mindestens eines fest installierten Verkehrsmesssensors, der an mindestens einem Messpunkt auf einem Trainingsstraßennetz angeordnet ist, **dadurch gekennzeichnet, dass** folgende Schritte durchgeführt werden:

    a. an dem mindestens einen Messpunkt wird mittels des mindestens einen fest installierten Verkehrsmesssensors ein Verkehrsfluss von Fahrzeugen (CAPa) gemessen;
    b. es werden zeitgestempelte Geolokalisierungsdaten (GPSa) von Fahrten innerhalb des Trainingsstraßennetzes erfasst;

c. es wird eine erste Trainingsbasis erstellt, die aus den zeitgestempelten Geolokalisierungsdaten (GPSa) der innerhalb des Trainingsstraßennetzes zurückgelegten Strecken, makroskopischen Daten (MACa) des Trainingsstraßennetzes und einer Klassifizierung (CLUa) der innerhalb des Trainingsstraßennetzes zurückgelegten Strecken besteht, wobei die Klassifizierung mindestens eine Klasse umfasst, wobei jede Klasse aus durchgeführten Fahrten mit ähnlichem Verhalten in Bezug auf die gemessenen Verkehrsflussmengen besteht und die makroskopischen Daten aus der Topologie, dem Straßentyp, der Anzahl der Fahrabschnitte, der Höchstgeschwindigkeit des Fahrabschnitts, der Beschilderung des Fahrabschnitts, der Steigung des Fahrabschnitts und der Länge des Fahrabschnitts ausgewählt werden;
d. es wird ein Klassifikator (MOC) mittels einer ersten maschinellen Trainingsmethode (CLA) erstellt, die auf der ersten erstellten Trainingsbasis trainiert wurde, wobei der Klassifikator mindestens eine Klasse der Klassifizierung mindestens einem Abschnitt des Straßennetzes in Abhängigkeit von den makroskopischen Daten des Abschnitts des Straßennetzes, von Zeitparametern (PTE) in Bezug auf die Zeiten der zurückgelegten Fahrten und von den Geolokalisierungsdaten der innerhalb des Straßennetzes durchgeführten Fahrten in dem Straßennetz zuordnet;
e. es wird eine zweite Trainingsbasis aus den Verkehrsflussmessungen (CAPa), den zeitgestempelten Geolokalisierungsdaten (GPSa) der innerhalb des Trainingsstraßennetzes zurückgelegten Fahrten und der Klassifizierung (CLUa) der innerhalb des Trainingsstraßennetzes zurückgelegten Fahrten erstellt;
f. für jede Klasse der Klassifizierung wird ein Verkehrsflussmodell (MOD) mithilfe einer zweiten automatischen Trainingsmethode (APP) erstellt, die auf der erstellten zweiten Trainingsbasis trainiert wurde, wobei jedes Verkehrsflussmodell einen Verkehrsfluss von Fahrzeugen für die betreffende Klasse auf der Grundlage der Geolokalisierungsdaten der zurückgelegten Fahrten zuordnet;
g. es werden zeitgestempelte Geolokalisierungsdaten (GPSb) von innerhalb des betreffenden Straßennetzes zurückgelegten Fahrten erfasst;
h. mindestens ein Abschnitt des betrachteten Straßennetzes wird anhand des Klassifikators (MOC), der zeitgestempelten Geolokalisierungsdaten (GPSb), der makroskopischen Daten (MACb) des Abschnitts des betrachteten Straßennetzes und der Zeitparameter (PTE) klassifiziert; und

i. der Verkehrsfluss (D) des mindestens einen Abschnitts des betrachteten Straßennetzes wird anhand des Verkehrsflussmodells (MOD), der bestimmten Klasse des mindestens einen Abschnitts und der zeitgestempelten Geolokalisierungsdaten (MACb) bestimmt.

2. Verfahren zur Bestimmung eines Verkehrsflusses von Fahrzeugen nach Anspruch 1, wobei das Verfahren einen Klassifizierungsschritt (CLUa), vorzugsweise einen automatischen Klassifizierungsschritt, der innerhalb des Trainingsstraßennetzes zurückgelegten Fahrten umfasst, wobei dieser Schritt den Schritten zur Erstellung der ersten und zweiten Trainingsbasis vorausgeht und die Klassifizierung anhand der Verkehrsflussmessungen und der mit einem Zeitstempel versehenen Geolokalisierungsdaten der innerhalb des Trainingsstraßennetzes zurückgelegten Fahrten durchgeführt wird.

3. Verfahren zur Bestimmung eines Verkehrsflusses von Fahrzeugen nach Anspruch 2, wobei die Anzahl der Klassen der Klassifizierung zwischen 5 und 60, vorzugsweise zwischen 8 und 50 und vorzugsweise zwischen 30 und 50 liegt.

4. Verfahren zur Bestimmung eines Verkehrsflusses von Fahrzeugen nach einem der vorhergehenden Ansprüche, wobei die makroskopischen Daten (MACa, MACb) des Straßennetzes von einem geografischen Informationssystem bereitgestellt werden.

5. Verfahren zur Bestimmung eines Verkehrsflusses von Fahrzeugen nach einem der vorhergehenden Ansprüche, wobei das erste maschinelle Trainingsverfahren (CLA) ein überwachtes maschinelles Regressionstraining ist, vorzugsweise ein Entscheidungsbaumwald.

6. Verfahren zur Bestimmung eines Verkehrsflusses von Fahrzeugen nach einem der vorhergehenden Ansprüche, wobei das zweite maschinelle Trainingsverfahren (APP) ein überwachtes maschinelles Regressionstraining ist, vorzugsweise ein monovariables Regressionsmodell erster Ordnung.

7. Verfahren zur Bestimmung eines Verkehrsflusses von Fahrzeugen nach einem der vorhergehenden Ansprüche, wobei die Zeitparameter (PTE) aus Monat, Woche, Wochentag, Werktagen oder Feiertagen, Zeitfenster ausgewählt werden.

8. Verfahren zur Bestimmung eines Verkehrsflusses von Fahrzeugen nach einem der vorhergehenden Ansprüche, wobei der Klassifikator (MOC) zusätzlich eine Wahrscheinlichkeit der Zugehörigkeit zu einer Klasse der Klassifizierung bestimmt.

9. Verfahren zur Bestimmung eines Verkehrsflusses von Fahrzeugen nach Anspruch 8, wobei der Verkehrsfluss (D) des mindestens einen Abschnitts des betrachteten Straßennetzes mittels eines gewichteten Durchschnitts der durch das Verkehrsflussmodell für verschiedene Klassen bestimmten Verkehrsflüsse bestimmt wird, wobei die Gewichtung der Wahrscheinlichkeit der Zugehörigkeit zu einer bestimmten Klasse entspricht.

10. Verfahren zur Bestimmung eines Verkehrsflusses von Fahrzeugen nach einem der vorhergehenden Ansprüche, bei dem der Verkehrsfluss von Fahrzeugen (D) auf dem mindestens einen Abschnitt des betrachteten Straßennetzes auf einer Straßenkarte, vorzugsweise mittels eines Computersystems oder eines Smartphones, angezeigt wird.

**Claims**

1. Method for determining a vehicle flow (D) on at least one section of a road network under consideration, by means of at least one fixed traffic measurement sensor arranged at at least one measurement point arranged on a training road network, **characterized in that** the following steps are implemented:

   a. a vehicle flow is measured (CAPa) at said at least one measurement point by means of said at least one fixed traffic measurement sensor;
   b. time-stamped geolocation data (GPSa) on journeys made within said training road network are acquired;
   c. a first training database is constructed on the basis of said time-stamped geolocation data (GPSa) on journeys made within the training road network, macroscopic data (MACa) on said training road network, and a classification (CLUa) of said journeys made within said training road network, said classification comprising at least one class, each class being composed of journeys made having similar behaviours in terms of measured flows, said macroscopic data being chosen from the topology, the type of road section, the number of lanes of the road section, the maximum speed of the road section, the traffic signals of the road section, the slope of the road section, and the length of the road section;
   d. a classifier (MOC) is constructed by means of a first machine learning method (CLA) trained on said constructed first training database, said classifier associating at least one class of said classification with at least one section of said road network depending on said macroscopic data on said section of said road network, time parameters (PTE) relating to the periods of the journeys made, and said geolocation data on journeys made within said road network;

e. a second training database is constructed on the basis of said vehicle flow measurements (CAPa), said time-stamped geolocation data (GPSa) on journeys made within said training road network, and said classification (CLUa) of said journeys made within said training road network;

f. a flow model (MOD) is constructed, for each class of said classification, by means of a second machine learning method (APP) trained on said constructed second training database, each flow model associating a vehicle flow for the class under consideration depending on said geolocation data on journeys made;

g. time-stamped geolocation data (GPSb) on journeys made within said road network under consideration are acquired;

h. at least one section of the road network under consideration is classified by means of said classifier (MOC), said time-stamped geolocation data (GPSb), macroscopic data (MACb) on said section of the road network under consideration, and time parameters (PTE); and

i. the flow (D) of said at least one section of the road network under consideration is determined by means of said flow model (MOD), said determined class of said at least one section, and said time-stamped geolocation data (MACb).

2. Method for determining a vehicle flow according to Claim 1, wherein said method comprises a step of classifying (CLUa), preferably a step of automatically classifying, said journeys made within the training road network, this step being prior to the steps of constructing said first and second training databases, said classification being implemented depending on said flow measurements and said time-stamped geolocation data on journeys made within said training road network.

3. Method for determining a vehicle flow according to Claim 2, wherein the number of classes of said classification is between 5 and 60, preferably between 8 and 50, and in a preferred manner between 30 and 50.

4. Method for determining a vehicle flow according to one of the preceding claims, wherein said macroscopic data (MACa, MACb) on said road network are provided by a geographic information system.

5. Method for determining a vehicle flow according to one of the preceding claims, wherein said first machine learning method (CLA) is supervised regression machine learning, preferably a decision forest.

6. Method for determining a vehicle flow according to one of the preceding claims, wherein said second machine learning method (APP) is supervised regression machine learning, preferably a univariate regression model of order one.

7. Method for determining a vehicle flow according to one of the preceding claims, wherein said time parameters (PTE) are chosen from month, week, day of the week, working days or non-working days, and time slot.

8. Method for determining a vehicle flow according to one of the preceding claims, wherein said classifier (MOC) determines, furthermore, a probability of belonging to a class of said classification.

9. Method for determining a vehicle flow according to Claim 8, wherein said vehicle flow (D) of said at least one section of said road network under consideration is determined by means of a weighted average of flows which are determined by said flow model for various classes, the weighting corresponding to the probability of belonging to a determined class.

10. Method for determining a vehicle flow according to one of the preceding claims, wherein the vehicle flow (D) on said at least one road network section under consideration is displayed on a road map, preferably by means of a computer system or a smartphone.

[Fig 1]

[Fig 2]

[Fig 3]

[Fig 4]

[Fig 5]

[Fig 6]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20211953 A
- JP 2012198839 B
- US 2014100766 A
- US 2018299559 A1

**Littérature non-brevet citée dans la description**

- **FELDMAN, OLGA**. The GEH measure and quality of the highway assignment models.. Association for European Transport and Contributors, 2012, 1-18